# EUROPEAN PATENT APPLICATION

(11) **EP 4 344 857 A1**
(43) Date of publication of application: **03.04.2024**
(21) Application number: 22198928.8
(22) Date of filing: 30.09.2022
(51) Int. Cl.: B29C 64/20, B29C 48/05, B29C 48/02, B29C 48/36, B29C 48/025, B29C 48/345, B29C 48/80, B29C 48/92, B29C 64/118, B29C 64/209, B33Y 10/00, B33Y 30/00

(54) **FPD PRINTER FOR HIGH-SPEED 3D PRINTING**

(71) Applicant: UBOT Technologies Sp. z o.o., 30-722 Kraków (PL)
(72) Inventor: LUDWIKOWSKI, Filip, 34-100 Wadowice (PL); MELON, Michal, 96-100 Skierniewice (PL)
(74) Representative: Jedrzejewski, Michal

(57) **Abstract**

FPD printer for quick 3D printing, divided into cold and heating zones, having at least one extruder with knurling material feeding, between which there are gears and two hotends , as well as a slicer assisted by algorithms, characterized by the fact that it has a cold zone and 2 to 3 heating zones (1, 2, 3). The extruder (6) has at least 4 drivegear (7, 8, 9, 10) with a diameter from 4 to 8 times larger than the diameter of the filament (4). The surface of the knurl has longitudinal grooves. The cold zone is connected to an external cooler and a pump, and the last heating zone is equipped with a die 16 for extruding the filament 4. The diameters of the gear 18 and the knurling do not differ more than by 20%. Slicer algorithms allow to shift the filling of the external walls of the printed object from the filling itself.

## Description

The subject of the invention is an FPD (Fast Plastic Deposit) printer for high-speed 3D printing. The printer can be used to produce various elements for industry, e.g. models for creating molds, as well as in other areas where rapid prototyping is used.

3D printers or their components are known in the art.

From the patent document US10073424 a 3D printer with accessories for 3D printers is known, including at least one communication computer connected to the 3D printer, at least one computer programmed to receive input data for a 3D printing object and to create a 3D printing profile containing printing parameters 3D object of the object using a 3D printer by matching the 3D printing input data to the database.

Patent document 239 617 discloses a 3D printer extruder equipped with a body to which a motor is attached, and in the extruder body there are channels through which materials are fed to the printer head and then to the nozzle, while the heating element is led to the printer head, and above the printer head has a heat dissipation system, characterized by the fact that in the extruder body, through a bearing, a switching block with pressure rollers is rotatably mounted, below which the axis with a bearing is fixed, and the head blocks with an arcuate raceway are mounted on a fixed the guide against which they can be moved vertically, while between each head block and the guide, a spring working in tension is mounted. A rotating screw is attached to the motor with a clutch, and a drive, preferably in the form of a servo, is mounted on the body, on which a drive gear is rotatably mounted, coupled with an input gear fixed in the switching block.

Previous solutions in the field of 3D printing did not ensure the simultaneous maintenance of print quality with a significant increase in speed for large-size prints, which would be useful for rapid prototyping and serial production. The present invention solves this problem.

FPD printer for quick 3D printing, divided into cold and heating zones, having at least one extruder with knurling material feeding, between which there are gears and two hotends, as well as a slicer assisted by algorithms, characterized by the fact that it has a cold zone and 2 to 3 heating zones, with the extruder having at least 4 drivegear with a diameter from 4 to 8 times larger than the diameter of the filament. The surface of the knurl has longitudinal grooves. The cold zone is connected to an external cooler and a pump. The diameters of the gear wheel and the knurl do not differ from each other by more than 20%. Slicer algorithms allow to shift the filling of the external walls of the printed object from the filling itself.

Preferably, the FPD high speed 3D printing printer has three heating zones.

Preferably, the FPD high speed 3D printing printer has four knurling wheels.

Most preferably, the diameter of the knurl is 4 to 8 times the diameter of the filament. Preferably, the knurling is made of hardened steel.

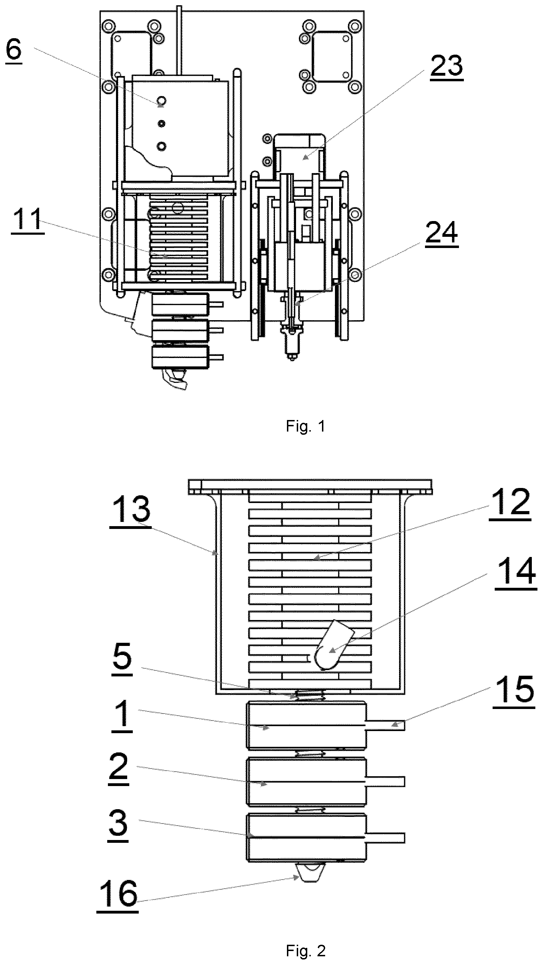

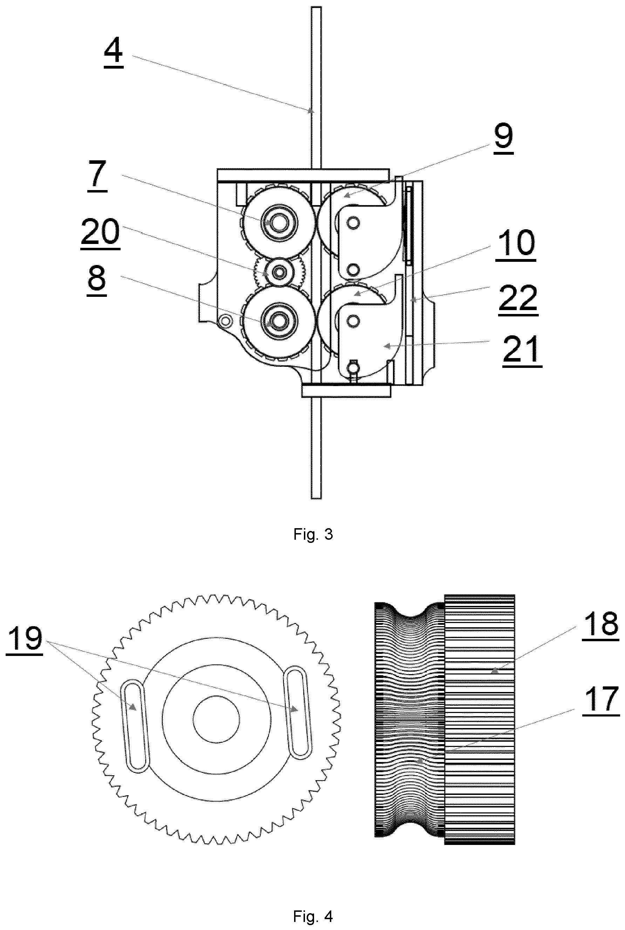

The invention is shown in the drawings, in which Fig. 1 shows the whole solution, Fig. 2 - roughing hotend , Fig. 3 - extruder, Fig. 4 - fine hotend .

The FPD printer for fast 3D printing assumes a significant printing speed, and thus - very high material extrusion speeds. To achieve such speeds, an innovative material feeding system was created, which has from 2 to 3 heating zones, for which unique material heating temperatures are set. In an exemplary embodiment, the 3D printer has three heating zones 1, 2, 3. Large diameter filament 4 is wound on spools. The filament 4 is preheated to the desired temperature, appropriate for each material, which allows you to straighten the filament 4 and give it a suitable shape in specially prepared initial guides, and then the filament 4 is guided by the guide 5. Then the filament 4 passes through the guide wires of low friction made of PTFE (Teflon) in which the material is cooled down to 40-60 °C. The next step is for the filament 4 to pass through sensors that control its flow. Next, filament 4 goes to the feeder - extruder 6.

In the solution according to the invention, the extruder 6 has four drivegear - two fixed ones 7, 8 and two tiltable ones 9, 10 with a diameter in the exemplary embodiment 4 times larger than the diameter of the filament 4, made of hardened steel, feeding the filament 4, and for increased friction by the material around the perimeter of each knurl is made more than 150 grooves so that the contact surface of the knurl and filament 4 is increased. The diameter of the knurling wheels can be 4 to 8 times the diameter of the filament 4 itself. The filament 4 is then led to the roughing hotend 11, which in the embodiment consists of four sections - one cold and three heating sections 1, 2, 3. A guide 5 for filament 4, made of stainless steel, runs through all sections. In the first section, a Teflon pipe is additionally routed, connecting it with the next section. The first section is the cold zone - receiving heat from the filament guide tube 4. It consists of a ribbed internal heat sink 12 made of aluminum, a seal, a coolant, and an insulating jacket 13 with connections 14 for cold coolant and drainage for warm coolant. The cold aisle system is connected to an external radiator that carries away the accumulated heat and to a pump that provides the pressure necessary for the flow of the refrigerant.

The next three sections are heating zones 1, 2, 3, allowing filament 4 to be heated to the temperature necessary for its melting. Each of these sections is made of a block made of a material with high thermal conductivity (e.g. copper, aluminum), in the exemplary embodiment - copper. Each block has inside a spiral heater 15 with a power of at least 100W, embedded in a ceramic material. The heaters and blocks are constructed in such a way that they surround the guide tube and allow the filament 4 to be heated up on each side. Each section is also cooled, which enables both rapid heating and cooling. The sections allow you to set other temperatures by means of a heater 15 and a thermistor, thanks to which the heating of the filament 4 is carried out in a controlled manner. The last heating zone is equipped with a nozzle 16 that allows for extruding filament 4 with a given diameter. The roughing hotend 11 also has a metal arm controlled by a servo mechanism that closes and opens the possibility of accidental - gravity feeding of material from the nozzle 16.

The extruder 6 in the 3D printer has drivegear - actuators that allow the filament to move. Each of the knurling wheels 7, 8, 9, 10 in the 3D printer according to the invention was made in such a way as to ensure the largest possible contact surface between the knurl and filament 4. The single knurl circumscribes through the recess 17 for filament 4 about 35% of the diameter of the filament 4 (set of two knurling wheels - about 70%). The engagement and synchronization between the two knobs is realized by the gear 18. In the exemplary embodiment, the gear 18 is made of plastic and the knurled is made of hardened steel. The transmission of the torque between the knurl and the gear 18 is realized by two longitudinal keys 19 which are an integral part of the knurl and a key hole made in the gear 18. The two elements joined in this way become a complete knurl. The diameters of the gear 18 and the knurl do not differ from each other by more than 20%. To increase the friction against the filament 4, the knurled wheel has at least 150 V-grooves in the semicircular recess 17 for filament 4.

Extruder 6 is based on the coupling of all drivegear for synchronized operation. The extruder 6 has 4 knurling wheels - two pairs 7, 8, 9, 10. Each of the knurling pairs has one fixed wheel 20, bearing on both sides with sockets made in the extruder housing 6 and one moving wheel, bearing on both sides, on the movable lever 21. The lever 21 is tilting and regulates the pressure of the second knurl in relation to the first, stationary one. The pressure is regulated by a pressure plate 22 made on the principle of a slide. The synchronization between two fixed knobs is realized by means of three gears, thanks to which the knobs always turn in the same direction and at the same speed, and their synchronization is practically loose-free. To ensure the possibility of movement, the first knurl is driven by a stepper motor 23. To increase the torque and positioning precision, a planetary gear was also used. Directly from the gear is the lower - second in terms of filament 4 passes - pair of drivegear.

The solution assumes the use of water cooling due to the high power of the heaters and the need to receive large thermal energy from the cold zone. As a result, the filament 4 is preheated and finally heated to be extruded properly. For example, the first zone 1 is heated to 150 °C , the second zone 2 to 200 °C , and the third zone 3 to 240 °C. These values result from the machine manufacturer's settings, and the user only selects the printing temperature, e.g. 230 °C. These temperatures are selected dynamically, by means of a heater 15 and a thermistor, depending on the speed of the machine.

Hotend 11 is used for rough printing paths (e.g. fill), while the precise hotend 24 is for leading precise paths and filling tight corners. The precise hotend 24 changes its position during operation by means of the stepper motor 23, which drives it up to the rest position and down to the operating position.

The solution according to the invention is supported by algorithms cutting the object into layers (the so-called slicer). The filling of the object (rough printing) is performed by the roughing tool and is laid on a multiple of the thickness of the precise hotend 24 in the range from 1 to 5. In this particular case, the thickness of the filling layer is a multiple of the thickness of the fine layers. In an embodiment, it is twice as high. The algorithm also detects the so-called tight corners and places where the roughing hotend 11 cannot fit and fills them with the precise hotend 24. Additionally, the algorithms allow the filling of the outer walls of the printed object to be moved away from the filling to avoid thermal deformation of the outer walls caused by the high heat capacity of the filament specified in filling.

The advantage of the 3D printer according to the invention is the possibility of maintaining the print quality at the same time with a significant increase in speed (even up to 10 times) for large-size prints, and thus accelerating the production time of large details, depending on the geometry and filling of the object, while maintaining precision parameters. An additional advantage is the increase in strength for specific objects - tests of samples have shown that they are characterized by higher strength compared to the standard sample.

## Claims

1. FPD printer for quick 3D printing, divided into cold and heating zones, with at least one extruder with knurled material feeding the material, between which there are gears and two hotends, as well as a slicer supported by algorithms, **characterized by** having a cold zone and 2 to 3 heating zones, where the extruder (6) has at least 4 drivegear (7, 8, 9, 10) with a diameter from 4 to 8 times larger than the diameter of the filament (4), where the surface of the knurl has longitudinal grooves, the zone the cold one is connected with an external cooler and a pump and the last heating zone is equipped with a nozzle 16 for extruding filament 4, the diameters of the gear 18 and the knurling do not differ from each other more than within 20% and the slicer algorithms allow for moving the filling of the external walls of the printed object from the filling itself.

2. FPD printer for quick 3D printing according to claim 1, **characterized in that** it has three heating zones (1, 2, 3).

3. FPD printer for quick 3D printing according to claim 1, **characterized in that** it has four knurling wheels (7, 8, 9, 10).

4. FPD printer for quick 3D printing according to claim 1 **characterized in that** the diameter of the knurl is 4 to 8 times the diameter of the filament.

5. FPD printer for quick 3D printing according to claim 1 **characterized in that** the knurling is made of hardened steel.
